# EUROPEAN PATENT APPLICATION

(11) **EP 4 603 342 A1**
(43) Date of publication of application: **20.08.2025**
(21) Application number: 24158240.2
(22) Date of filing: 16.02.2024
(51) Int. Cl.: B60S 1/34

(54) **WINDSCREEN WIPER PIVOT HOUSING ASSEMBLY WITH BUSHINGS**

(71) Applicant: Valeo Systèmes d'Essuyage, 78322 Le Mesnil Saint Denis (FR)
(72) Inventor: AMBROZINSKI, Mateusz, SKAWINA (PL)
(74) Representative: Valeo Visibility

(57) **Abstract**

A pivot housing assembly (46), particularly for a windshield wiper system, comprising:
a pivot housing (49) having a sleeve portion (48) comprising a through bore (51) in which a pivot shaft (44) is intended to be inserted, the bore (51)having a main axis (A);
at least one bushing (60) which is received in an axial end of the through bore (51) and in which the pivot shaft (44) is intended to be journaled, said bushing (60) being made in one piece and being configured to hold the pivot shaft (44) in rotation within the through bore (51) and to axially retain the pivot shaft (44) within the through bore (51) in the direction of the main axis (A).

## Description

### Technical field

The present invention relates, generally, to windshield wiper systems, and more specifically, to a pivot housing for a windshield wiper system which is easier and cheaper to manufacture.

### Background of the invention

Conventional windshield wiper systems known in the related art include some type of wiper assembly mounted to a wiper arm which, in turn, is mounted adjacent the windshield and pivotally driven to impart reciprocal motion to the wiper blade assembly across the windshield. A rubber wiping element is supported by the wiper assembly and contacts the windshield across the surface to be wiped. In addition, these windshield wiper systems include a linkage assembly interposed between an electrical wiper motor and the wiper arms for translating rotational movement of the motor into pivotal movement of the wiper arm across the windshield. The windshield wiper systems include a connection between the linkage assembly and the wiper arm.

The wiper arm is mounted on a pivot shaft which is journaled in a pivot housing. The pivot housing comprises a sleeve having a through bore in which bushings are fitted. The bushings present the shape of a section of a circular tube.

The pivot housing is generally realized by a casting or molding process. When the pivot housing exits from the mold, an internal face of the bore presents a draft angle. The internal face must therefore be rectified by a machining operation (e.g. boring) before the insertion of the bushings so that the shape of the internal wall presents the shape of a circular right cylinder adapted to the shape of the bushings. However, this machining operation requires time and may be costly to execute, especially in high-volume production.

It is known to use a plurality of metal components to ensure the assembly and retention of the pivot shaft in the through bore. The use of a plurality of components makes assembly difficult and expensive.

The invention proposes a pivot housing assembly that is easy to assemble with a reduced number of components and a bushing that allows easy assembly with a reduced number of parts.

### Summary of the invention

The invention proposes a pivot housing assembly, particularly for a windshield wiper system, comprising:
a pivot housing having a sleeve portion comprising a through bore in which a pivot shaft is intended to be inserted, the bore having a main axis ;
at least one bushing which is received in an axial end of the through bore and in which the pivot shaft is intended to be journaled, said bushing being made in one piece and being configured to hold the pivot shaft in rotation within the through bore and to axially retain the pivot shaft within the through bore in the direction of the main axis.

According to one aspect of the invention, the pivot housing assembly comprises two bushings which are received in the two axial ends of the through bore and in which the pivot shaft is intended to be journaled.

According to one aspect of the invention, the bushing is joined together with the pivot shaft.

According to one aspect of the invention, the bushing comprises a flange at one end which forms a thrust face against an axial end face of the sleeve portion of the pivot housing.

According to one aspect of the invention, the internal face of the through bore presents two convergent sections extending from each end towards the other end of the bore, the bushing presenting a tapered external face arranged to match the convergent shape of the associated convergent section of the bore.

According to one aspect of the invention, the convergent sections of the internal face of the bore meet each other in the bore.

According to one aspect of the invention, the bushing has an internal guiding face presenting a right circular cylindrical shape parallel to the main axis.

According to one aspect of the invention, the bushing comprises a plurality of teeth, preferably at least three teeth, that extend radially inwards from the guiding face, said teeth being arranged to fit into at least three receiving areas of the pivot shaft arranged to receive said teeth, said teeth being arranged to maintain the pivot shaft within the through bore being and to retain axially the pivot shaft within the through bore in the direction of the main axis.

According to one aspect of the invention, the bushing comprises more than three teeth that extend radially inwards from the guiding face, for example four teeth, for example five teeth, for example more than five teeth, said teeth being arranged to fit into receiving areas of the pivot shaft arranged to receive said teeth.

According to one aspect of the invention, the teeth comprising a locking hook arranged to be locked in a locking groove.

According to one aspect of the invention, the locking hook and the locking groove have complementary shapes.

According to one aspect of the invention, the locking grooves are arranged to block the locking hooks in the pivot shaft.

According to one aspect of the invention, the teeth have a hook shape.

According to one aspect of the invention, the teeth are arranged above the flanges of the bushing.

According to one aspect of the invention, the teeth are arranged at an end of the bushing that projects outward of the bore.

According to one aspect of the invention, the teeth form a flattened dome above the flanges of the bushing.

According to one aspect of the invention, the bushing is fitted in the through bore with a radial clearance allowing the brushing to rotate around the main axis of the through bore in relation to the sleeve portion.

According to one aspect of the invention, the bushing is attached to the pivot shaft by the teeth and the receiving areas, the bushing and the pivot shaft being arranged to rotate with respect to the sleeve portion.

According to one aspect of the invention, the bushing is arranged to surround the pivot shaft and to keep it rotative with respect to the sleeve portion.

Alternatively, the bushings are fixed inside the bore by interference fitting with the internal face.

According to one aspect of the invention, the bushing is arranged as a sealing gasket to enclose the lubricant in the through bore.

According to one aspect of the invention, the pivot housing assembly is arranged to be assembled without using a metal piece.

According to one aspect of the invention, the bushing is made of a composite material, comprising for example a mixture of plastic resin and glass fibers.

According to one aspect of the invention, composite material comprises a thermoplastic or thermoset resin such as nylon (PAA66), or another suitable resin composition and glass fibers

According to one aspect of the invention, the pivot shaft has a diameter comprised between 10 mm and 20mm, preferable between 12mm and 18mm, for example of 12mm, for example of 14mm, for example of 16mm.

According to one aspect of the invention, the pivot housing assembly comprises at least another sealing component.

According to one aspect of the invention, the sleeve portion is realized by a molding process, the internal face of each convergent section of the bore presenting a draft angle directly issued from the molding process.

According to one aspect of the invention, the sleeve portion is fabricated from a thermoplastic or thermoset resin material, aluminum, or zinc.

According to one aspect of the invention, the pivot housing is made in one piece.

According to one aspect of the invention, the pivot housing comprises a spring washer being axially interposed between the wiper arm and the bushing second end section of the pivot shaft that projects outward of the bore, said second end section of the pivot shaft being coupled to the wiper arm.

The invention also concerns a wiper system comprising a pivot housing assembly as disclosed above, said wiper system comprising a pivot shaft which is inserted in the bore and journaled in at least one bushing, preferably in two bushings as disclosed above.

The invention also proposes a bushing arranged to be assembled in an assembly previously disclosed.

The invention also proposes a process for assembling a pivot housing assembly, said process comprising the steps of:
Assembling a brushing with a pivot shaft, said brushing comprising at least three teeth arranged to fit with receiving areas of the pivot shaft,
Mounting the pivot shaft joined with the bushing in a through bore.

Further features, details and advantages of the invention will become more clearly apparent from reading the description given below by way of indication with reference to the drawings, in which:
Figure 1 is a partial perspective view of the front of an automotive vehicle having a windshield wiper system including a pivot housing assembly realized according to the teachings of the invention;
Figure 2 is a perspective exploded view of the pivot housing assembly and the pivot shaft realized according to a first embodiment of the invention;
Figure 3 is a perspective view of the pivot housing assembly and the pivot shaft of figure 2 in an assembled state;
Figure 4 is a cross-sectional view of the pivot housing of figure 2 along the axial cutting plane 4-4, showing the arrangement of the bushings in a bore of the pivot housing realized according to the first embodiment of the invention;
Figure 5 is a cross-sectional view of one bushing of the pivot housing assembly of figure 2; and
Figures 6 and 7 are cross-sectional views of the pivot housing during its molding process.

It should first of all be noted that the figures disclose the invention in a detailed manner so as to implement the invention, and said figures may of course serve to define the invention more clearly, where necessary.

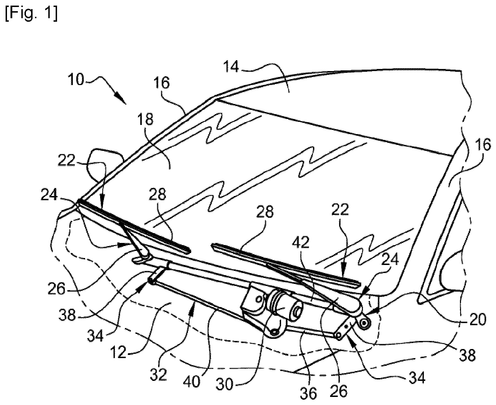

Referring now to the figures, where like numerals are used to designate like structure, a portion of a vehicle is illustrated at 10 in FIG. 1. The vehicle body includes a cowl 12, a roof 14, and a pair of laterally spaced front pillars 16 extending between the roof 14 and the cowl 12. The pillars 16, roof 14, and cowl 12 cooperate to define a generally rectangular perimeter, which supports a windshield 18.

A windshield wiper system, according to the present invention, is generally indicated at 20 in FIG. 1 and is employed to clean the glass windshield 18. The windshield wiper system 20 includes a pair of wiper assemblies 22, which correspond to the driver and passenger side of the vehicle 10. Each wiper assembly 22 is carried by a corresponding wiper arm assembly 24. The wiper arm assembly 24 includes a wiper arm 26 having one end with an attachment member (not shown but generally known in the art) adapted to operatively engage a wiper assembly 22 and another end pivotally mounted to a linkage assembly, as will be described in greater detail below. The wiper arm assembly 24 is adapted to facilitate the oscillating movement of the wiper assembly 22 across the windshield 18 to clean the windshield 18. The remaining components of the wiper system 20 are not visible from the exterior of the vehicle 10. Rather, the remaining components are generally located within the engine compartment and concealed by the cowl 12 or other portions of the vehicle body.

While the wiper assembly 22 illustrated in FIG. 1 is shown in connection with the front windshield 18 of the vehicle 10, those having ordinary skill in the art will appreciate that wiper assemblies 22 may be employed in other areas of a vehicle 10, such as a rear window (not shown) or a head lamp (not shown) that employs a wiper system 20. Thus, it will be understood that the present invention is not limited for use solely in connection with wiper arm assemblies 24 and windshield wiper assemblies 22 adapted for use on a vehicle's windshield 18, but for use in all applications where wiper arm assemblies 24 and wiper assemblies 22 are employed.

Referring again to FIG. 1, the wiper system 20 further includes an electrical wiper motor 30 and a linkage assembly, generally indicated at 32. The linkage assembly 32 is interposed between the electrical wiper motor 30 and the wiper arm assemblies 24 for translating rotational movement of the motor 30 into pivotal movement of the wiper arm 26 across the windshield 18. The linkage assembly 32 includes a pivot shaft assembly, generally indicated at 34.

The pivot shaft assembly 34 is adapted to operatively receive one end of the wiper arm 26. Accordingly, the number of pivot shaft assemblies 34 corresponds to the number of wiper arms 26 within the system 20. The linkage assembly 32 may further include a drive arm 36 operatively attached to the pivot shaft assembly 34 corresponding to the driver's side wiper arm 26 through a crank 38 of the pivot shaft assembly. It should be appreciated that, in the embodiment illustrated, the linkage assembly 32 may further include a passenger arm 40 operatively attached to the pivot shaft assembly 34 corresponding to the passenger's side wiper arm 26 through e.g. a crank 38 to power the passenger's side wiper assembly 24.

The linkage assembly 32 may also, as here, include a unitizing or cross tube 42 extending between the pivot shaft assemblies 34 corresponding to the driver and passenger side wiper arms 26. The electrical wiper motor 30 is generally known in the art and is typically employed to power the wiper system 20 to move the windshield wiper assemblies 22 in an oscillating manner across the surface of the windshield 18.

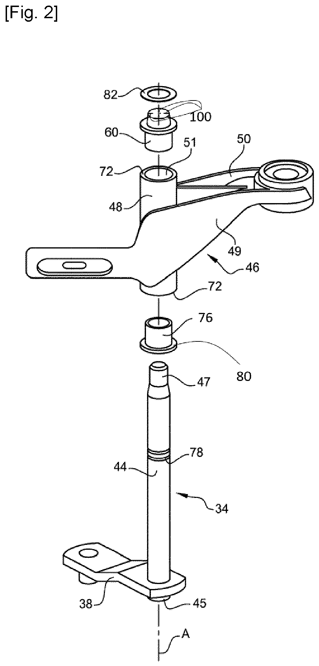

Referring to figure 2, the pivot shaft assembly 34 includes a pivot shaft, generally indicated at 44, and a pivot housing assembly, according to the present invention and generally indicated at 46, through which the pivot shaft 44 is guided.

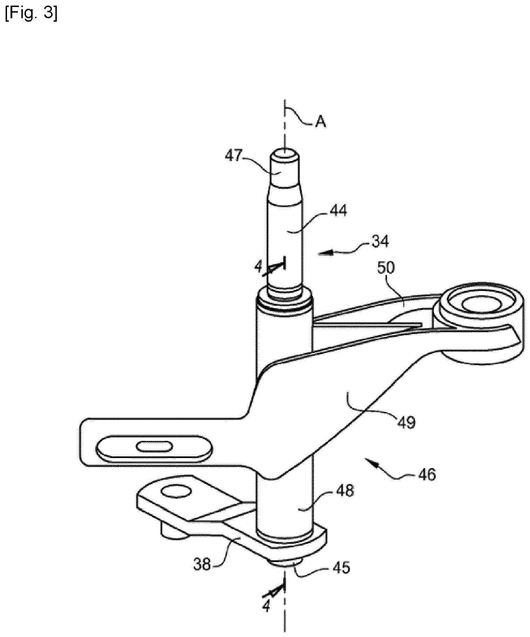

The pivot shaft 44 has a main axis "A" which is oriented vertically on the figure 2. The pivot shaft 44 includes a base portion 45, shown at the bottom of the figure 3, which is mounted to the crank 38. The pivot shaft 44 further includes a pivot head 47 that is adapted to engage a portion of the wiper arm 26. The orientation of the pivot shaft 44 relative to the pivot housing assembly 46 is adapted to provide rotational movement of the pivot shaft 44 around its main axis "A" within the pivot housing assembly 46 to direct the wiper arm 26 in an oscillating manner across the windshield 18.

Specifically, the pivot housing assembly 46 comprises a pivot housing 49 which remains stationary, fixed to the unitizing tube 42. As the drive arm 36 actuates the crank 38, the pivot shaft 44 rotates within the pivot housing assembly 46, thereby moving the wiper arm 26. The pivot shaft 44 is made of a metallic material and has a generally circular cross-sectional shape.

The pivot housing 49 includes a sleeve portion 48 extending axially and comprising a through bore 51 to receive the pivot shaft 44 therein. The pivot housing 49 also includes a bracket portion 50 extending outwardly from the sleeve portion 48 to operatively secure the linkage assembly 32 to the vehicle 10. The bracket portion 50 is used to engage a portion of the vehicle 10. More specifically, the bracket portion 50 is adapted to be operatively attached to a portion of a vehicle in an under-mount manner. As shown in figure 1, the bracket portion 50 is adapted to be operatively secured to the underside of a transversely extending portion of the body of a vehicle 10. However, those having ordinary skill in the art will appreciate that the bracket portion 50 may be operatively attached to any portion of the vehicle 10. By way of example, the bracket portion 50 may be attached to a portion of the engine plenum (not shown).

The bore 51 of the sleeve portion 48 is radially delimited by an internal face 52 which is globally cylindrical and circular in cross-sectional shape. The bore 51 presents a main central axis "A" which coincides with the main axis of the pivot shaft 44 when inserted in the bore 51.

At least the sleeve portion 48 is made of a material which may be easily cast or formed by molding, for instance a thermoplastic or thermoset resin, possibly with a filler such as glass or carbon fiber. Alternatively, the sleeve portion 48 may be fabricated from a lightweight non-ferrous metal such as aluminum or zinc, (although ferrous metals may also be suitable in certain applications). Preferably, the pivot housing 49 is made in one piece from the same material as the sleeve portion 48.

The internal face 52 of the bore 51 is divided in two convergent sections 52A, 52B extending from each end towards the other end of the bore 51.

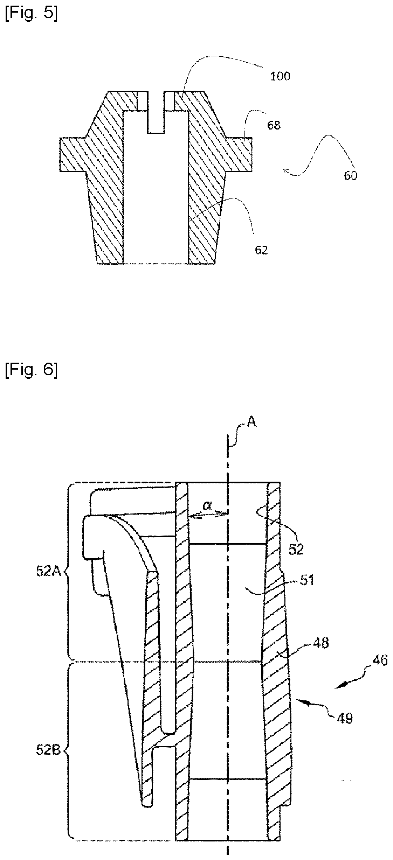

More particularly, the sleeve portion 48 of the pivot housing 49 is realized by a casting or molding process. The internal face 52 of each convergent section 52A, 52B of the bore 51 presents a draft angle α directly issued from the casting or molding process. The draft angle α is defined with respect to the main axis of the bore as indicated in figure 5. By way of example, the draft angle has a value comprised between 0,5° and 2°, for example 1°; it shall therefore be noted that the draft angle has been exaggerated for clarity in the accompanying figures.

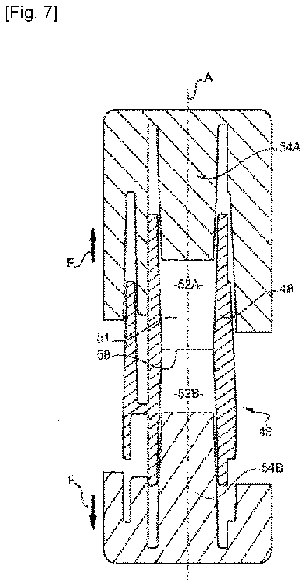

As illustrated on figures 6 and 7, during the molding process, the bore 51 is obtained by two mold sections 54A, 54B extending axially inside the bore 51 and meeting along a parting line 56. The mold sections 54A, 54B extends axially to meet midway of the bore 51 length. Each mold section 54A, 54B presents a draft angle α allowing the ejection of the mold sections 54A, 54B axially from the bore 51, as illustrated by the arrows "F" on the figure 7. Due to the molding process, the convergent sections 52A, 52B of the internal face 52 of the bore 51 meets each other in the bore 51 along the transverse parting line 56, for example at midway of the bore 51. A witness mark 58 generally occurs on the internal face 52 along the parting line 56.

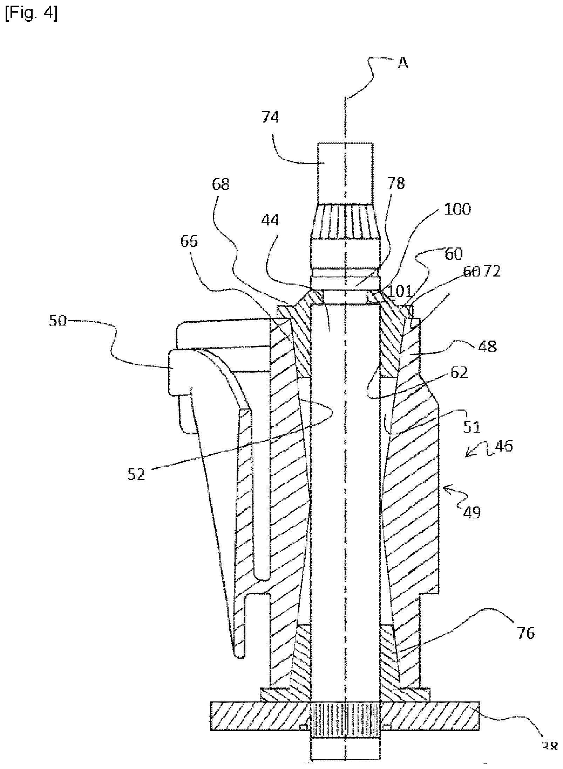

Referring again to figures 2 and 4, one bushing 60 is received in an axial end of the through bore 51. The pivot shaft 44 is intended to be journaled in the bushing 60. For this purpose, each bushing 60 has an internal guiding face 62 presenting a right circular cylindrical shape parallel to the main axis "A" as indicated by the radial line 64 which is simultaneously perpendicular to the main axis "A" and to the internal guiding face 62. The pivot shaft 44 is fitted in the bushing 60 with a radial clearance allowing the rotation of the pivot shaft 44 in the bushing 60. Preferably, the bushing 60 are fitted in the bore 51 with a radial clearance allowing the bushing 60 to rotate around the main axis "A" of the bore 51 in relation to the sleeve portion 49.

The bushings 60 is made in one piece and comprise a plurality of, and preferably at least three, teeth 100 configured to hold the pivot shaft 44 in rotation within the through bore 51 and to axially retain the pivot shaft 44 within the through bore 51 in the direction of the main axis A. The bushing 60 are stuck on the pivot shaft 44 by the teeth 100 and the receiving areas 101, the bushing 100 and the pivot shaft 44 being arranged to rotate with respect to the sleeve portion 48. The bushing 60 is arranged to surround the pivot shaft 44 and to keep it rotative with respect to the sleeve portion 48.

The teeth 100 are arranged above the flanges 68 of the bushing 60 and are arranged at an end of the bushings that projects outward of the bore 51. The teeth 100 are arranged to fit into receiving areas 101 of the pivot shaft 44. For example, the teeth 100 may comprise a locking hook arranged to be locked in a locking groove. The locking hook and the locking groove have complementary shapes. The locking groves are arranged to block the locking hooks in the pivot shaft 44. In other words, the teeth may have a hook shape. The teeth 100 form a flattened dome 102 above the flanges 68 of the bushing 60. The bushings are also arranged to sere as a sealing gasket, so as to enclose and retain the lubricant grease in the through bore.

Alternatively, or in addition, the pivot housing assemble may comprise at least another sealing component. The pivot housing assembly is arranged to be assembled without using a metal piece.

The bushing 60 is thus joined together with the pivot shaft 44. More precisely, as shown in figure 5, the bushings comprise a flange 68 at one end which forms a thrust face against an axial end face 72 of the sleeve portion 48 of the pivot housing 46. The bushings 60 comprise, preferably, at least three teeth 100, that extend radially inwards from the guiding face 62, said teeth 100 being arranged to fit into at least three receiving areas 101 of the pivot shaft 44 arranged to receive said teeth 100, said teeth 100 being arranged to maintain the pivot shaft 44 within the through bore 51 and to retain axially the pivot shaft 44 within the through bore 51 in the direction of the main axis A. The bushings can comprise more than three teeth 100, for example four, five, or six teeth.

Alternatively, it may be envisioned that, instead of discrete teeth, the bushings may comprise a continuous flange, extending radially inwards from the guiding face 62 and engaging & locking the pivot shaft in the same manner as in the embodiment depicted in the Figures.

According to the invention, it is not necessary to perform any machining operation on the internal face 52 of the bore 51 after its molding and before the insertion of the bushing 60 in the bore 51. The bushing 60 presents a tapered external face 66 matching the convergent shape of the associated section of the bore 51. As shown on the figure 5, the external face 66 of the bushing 60 thus presents an angle α relative to the main axis "A" which is equal to the draft angle α of the associated convergent section 52A, 52B.

Each bushing 60 is fabricated from a molded composite material, made of e.g. plastic resin and carbon or glass fibers, by e.g. an injection-molding or sintering process, in a form that is substantially finalized. Consequently, no further shaping, forming, or other such machining operation upon the bushings 60 is required prior to their insertion into the bore 51 of the sleeve portion 48 of the pivot housing 49.

By way of example, the bushing 60 may be fabricated from a composite material comprising a thermoplastic or thermoset resin such as PTFE, POM (aka "acetal"), polyimide, nylon (PAA66), or other suitable resin compositions and glass fibers. Optionally, the resin may incorporate or be impregnated with additional additives to improve the physical properties of the bushings 60, for instance oil or graphite to reduce friction.

Advantageously, it is provided that the bushing 60 has a flange 68 at one end which bears an annular thrust face 70 against an axial end face 72 of the sleeve portion 48. The external diameter of the flange 72 is greater than the internal diameter of the end of the bore 51. Thus, the flanges 68 stay outward of the sleeve portion 48. As will be explained in detail, the flanges 72 can replace washer which are traditionally arranged in the wiper systems.

Alternatively, the bushing is fixed inside the bore by interference fitting with the internal face.

As showed on the figure 4, the pivot shaft 44 is inserted in the bore 51 and journaled in the bushing 60. The crank 38 is coupled to the base portion 45 of the pivot shaft 44 projecting outward of the bore 51. The crank 38 abuts axially against the flange 80 of an adjacent second bushing 76 to block the axial displacement of the pivot shaft 44 in a first direction, here upward, relative to the sleeve portion 48. Thanks to the flange 80 of the bushing 76, no additional washer is required between the crank 38 and the sleeve 48 to avoid the friction of the crank against the sleeve.

In another embodiment, the second bushing has the same features as the bushing 60. In other words, the pivot housing assembly comprises two (substantially identical) bushings 60 at each end of the pivot shaft 44.

A second end section 74 of the pivot shaft 44, here an upper section, projects outward of the bore 51. This second end section 74 of the pivot shaft 44 is coupled to the wiper arm 24. Generally, the crank 38 is fixed to the pivot arm before its insertion in the bore 51, while the wiper arm 24 is fixed on the pivot shaft 44 after its insertion in the bore 51.

According to a first embodiment of the invention showed on the figures 2 and 4, the axial displacement of the pivot shaft 44 in a second direction, here downward, relative to the sleeve portion 48 is blocked by the bushings which comprise at least three teeth. Thus, it is not necessary to add additional pieces (for instance a circlip) to maintain the pivot shaft into the pivot housing.

The invention allows saving cost and assembly time and efforts by reducing the number of components in the assembly.

Moreover, since the bushings are made in one piece by a molding process, they are provided with at least three teeth that can advantageously replace at least a circlip and a washer to maintain the pivot shaft within the pivot housing. The mounting of the pivot housing assembly is thus faster and less expensive.

## Claims

1. A pivot housing assembly (46), particularly for a windshield wiper system, comprising:
- a pivot housing (49) having a sleeve portion (48) comprising a through bore (51) in which a pivot shaft (44) is intended to be inserted, the bore (51) having a main axis (A); and
- at least one bushing (60) which is received in an axial end of the through bore (51) and in which the pivot shaft (44) is intended to be journaled, said bushing (60) being made in one piece and being configured to hold the pivot shaft (44) in rotation within the through bore (51) and to axially retain the pivot shaft (44) within the through bore (51) in the direction of the main axis (A).

2. A pivot housing assembly (46) according to claim 1, wherein the bushing (60) is joined together with the pivot shaft (44).

3. A pivot housing assembly (46) according to any one of claims 1 or 2, wherein the bushing (60) comprises a flange (68) at one end which forms a thrust face against an axial end face (72) of the sleeve portion (48) of the pivot housing (44).

4. A pivot housing assembly (46) according to any one of claims 1 to 3, wherein the bushing (60) has an internal guiding face (62) presenting a right circular cylindrical shape parallel to the main axis (A).

5. A pivot housing assembly (46) according to any one of claims 1 to 4, wherein the bushing (60) comprises a plurality of teeth (100), that extend radially inwards from the guiding face (62), said teeth (100) being arranged to fit into at least three receiving areas (101) of the pivot shaft (44) arranged to receive said teeth, said teeth (100) being arranged to maintain the pivot shaft (44) within the through bore (51) being and to retain axially the pivot shaft (44) within the through bore (51) in the direction of the main axis (A).

6. A pivot housing assembly (46) according to claim 5, wherein the bushing (60) comprises at least four teeth (100) that extend radially inwards from the guiding face (62), said teeth (100) being arranged to fit into receiving areas (101) of the pivot shaft (44) arranged to receive said teeth.

7. A pivot housing assembly (46) according to claim 5, wherein the teeth (100) each comprise a locking hook arranged to be locked in a locking groove.

8. A pivot housing assembly (46) according to any one of claims 1 to 7, wherein the bushing (60) is made of a composite material, the composite material comprising, for example, a mixture of plastic resin and glass fibers.

9. A pivot housing assembly (46) according to any one of claims 1 to 7, wherein the bushing (60) is fitted in the through bore (51) with a radial clearance allowing the brushing to rotate around the main axis (A) of the through bore (51) in relation to the sleeve portion (48).

10. A pivot housing assembly (46) according to any one of claims 1 to 8, wherein the bushing (60) is attached to the pivot shaft (44) by the teeth (100) and the receiving areas (101), the bushing (60) and the pivot shaft (44) being arranged to rotate with respect to the sleeve portion (48).

11. A pivot housing assembly (46) according to any one of claims 1 to 9, **characterized in that** it comprises two bushings (60) which are received in the two axial ends of the through bore (51) and in which the pivot shaft (44) is intended to be journaled.

12. A pivot housing assembly (46) according to any one of claims 5 to 11, wherein the bushing (60) is stuck on the pivot shaft (44) by the teeth (100) and the receiving areas (101), the bushing (60) and the pivot shaft (44) being arranged to rotate with respect to the sleeve portion (48).

13. A wiper system (20) comprising a pivot housing assembly (46) according to any one of claims 1 to 12, **characterized in that** it comprises a pivot shaft (44) which is inserted in the bore (51) and journaled in at least one bushing (60), preferably in two bushings (60).

14. A bushing (60) arranged to be assembled in an assembly of any one of claims 1 to 12.

15. A process for assembling a pivot housing assembly (46) according to any one of claims 1 to 12, said process comprising the steps of:
- assembling a brushing with a pivot shaft, said brushing comprising at least three teeth arranged to fit with receiving areas of the pivot shaft; and
- mounting the pivot shaft joined with the bushing in a through bore.
